# EUROPEAN PATENT SPECIFICATION

(11) **EP 0 343 682 B1**
(45) Date of publication and mention of the grant of the patent: **21.06.1995**
(21) Application number: 89109537.4
(22) Date of filing: 26.05.1989
(51) Int. Cl.: G06F 9/44

(54) **Automatic programming system**
Automatisches Programmiersystem
Système de programmation automatique

(30) Priority: 27.05.1988 JP 129501/88
(43) Date of publication of application: 29.11.1989
(73) Proprietor: MITSUBISHI DENKI KABUSHIKI KAISHA, Tokyo 100 (JP)
(72) Inventor: Ogino, Toru c/o Mitsubishi Denki K. K., Kamakura-shi Kanagawa-ken (JP)
(74) Representative: Goddar, Heinz J., Dr.

(56) References cited:
- COMPUTER DESIGN, vol. 25, no. 10, May 1986, pages 45-56, Massachusetts, US; H.J. HINDIN: "Intelligent tools automate high-level language programming"
- IEEE EXPERT, vol. 1, no. 4, winter 1986, pages 33-41, IEEE, New York, US; M.D.LUBARS et al.: "Intelligent support for software specification and desing"
- IEEE TRANSACTIONS ON SOFTWARE ENGINEERING, vol. SE-11, no. 11, November 1985, pages 1257-1268, IEEE, New York, US; R. BALZER: "A 15 year perspective on automatic programming"
- IEEE TRANSACTIONS ON SOFTWARE ENGINEERING, vol. SE-8, no. 1, January 1982, pages 1-12, IEEE, New York, US; R.C. WATERS: "The programmer's apprentice: Knowledge based program editing"
- 10TH INTERNATIONAL CONFERENCE ON SOFTWARE ENGINEERING, Singapore, 11th-15thApril 1988, IEEE, New York, US; H. SHARP: "KDA - a tool for automatic design evaluation and refinement using the blackboard model of control"

## Description

### Background of the Invention

### [Field of the Invention]

This invention relates to an automatic programming system for permitting programming in software development to be done as automatically as possible.

### [Description of the Prior Art]

As prior art automatic programming system, there is one in a narrow sense, which automatically generates program source codes from block diagrams based on PAD system or the like as disclosed in a treatice entitled "Automatic Personal Computer Program Generation Based on PAD Specifications" (Treatice No. 3L-10) in Transactions II of the 36-th National Lecture Meeting of Information Processing Society of Japan. A broad-sense automatic programming system for supporting and automating all the processes of designing, manufacture and test from the definition of requests in the design of programs till the test is disclosed in a treatise entitled "--- Basic Concept --- Consistent Real-Time System Development System" (Treatise No. 5M-10) disclosed in Transactions II of the 36th-National Lecture Meeting of Information Processing Society of Japan. The above-mentioned narrow-sense automatic programming system is included in the broad-sense automatic programming system. For this reason, the broad-sense automatic programming system will now be described as the prior art automatic programming system in connection with its construction and operation.

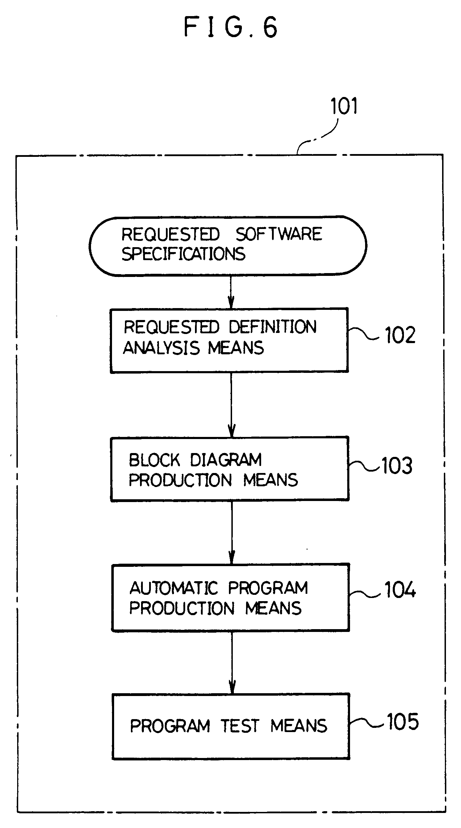

Fig. 6 is a block diagram showing a prior art example of software produced on the basis of the explanation of the afore-noted treatise "--- Basic Concept --- Consistent Real-Time System Development System". In Fig. 6, reference numeral 102 designates request definition analysis means for analyzing the definition of requests concerning the function or scale at the time of start of design on the basis of request specifications, 103 block diagram production means for producing commonly termed block diagrams such as data flow diagrams, control flow diagrams, module diagrams and PAD diagrams from the result of analysis of the means 102, 104 automatic programming production means for automatically producing source codes which can be executed by a computer on the basis of a block diagram, and 105 program test means for testing a program using source codes. These means are assembled as softwares in a computer. Usual computers available in the market are used as hardware.

The operation will now be described. The request definition analysis means 102 performs request definition analysis on the basis of request specifications of functions and scale. In the prior art, request definition analysis is not performed automatically by any machine, but manually by specialists. The contents of the manual request definition analysis performed by men are to determine program constitution satisfying request specifications at the time of design by trading-off. The block diagram production means 103 produces data flow diagrams, control flow diagrams, module diagrams and PAD diagrams as a result of the request definition analysis. The production of these diagrams is automatized, although not perfectly. The automatic programming production means 104 automatically produces source codes (programs) of a machine language satisfying the request specifications according to the produced block diagrams or the like. Lastly, the program test means 105 performs tests on programs of the above-mentioned source code type. The program test is performed to check if the request specifications at the time of the design are satisfied. It is made possible to conduct the test while following the program execution with the eyes for providing increased test efficiency. If the request specifications are not satisfied, it is necessary to perform programming afresh.

In this way, the design reviewing operation for reviewing the design results and pointing out and correcting defficiencies has been done entirely manually. For this reason, no design reviewing means as software for the purpose of automation has ever been assembled in the prior art system. Further, no means or software for performing FMEA (failure mode and effect analysis) at the time of the design has been assembled, and again this analysis has been performed manually.

Since the prior art automatic programming system has the above construction, the program constitution trading-off operation, failure mode and effect analysis based on block diagrams and design reviewing operation, these operations being performed at the time of the design, are not automatized, but are done manually. Therefore, many software design specialists are required, and enormous time is required for each individual operation. Further, the production of program test data based on the failure mode and effect analysis results is not automatized. Therefore, although the design and manufacture are directly coupled together, the design and test are not directly coupled together but are separated from each other. This means that the results of design cannot be effectively utilized at the time of the test unless manual operation has resort to.

### Summary of the Invention

This invention has been intended in order to solve the above problems, and its object is to provide an automatic programming system, which automatizes the trading off operation of producing program structure, failure mode and effect analysis and design reviewing operation at the time of the program design, thus reducing time required for each individual operation, and directly coupling the design and test to permit automatic and effective utility of the design data at the time of the test, thus automatizing the producing of the test data, saving man-hour at the time of the test and reducing test time so as to realize effective programming.

The invention is set out in claim 1.

The above and other objects, features and advantages of the invention will become more apparent from the following description when taken in conjunction with the accompanying drawings.

### Brief Description of the Drawings

Fig. 1 is a block diagram showing an embodiment of the invention;
Fig. 2 is a view showing a format of an FMEA sheet (analysis sheet) produced by a failure mode and effect analysis means shown in Fig. 1;
Fig. 3 is a flow chart for explaining the operation of the failure mode and effect analysis means;
Fig. 4 is a flow chart for explaining the operation of the automatic program test data production means shown in Fig. 1;
Fig. 5 is a flow chart for explaining a series of operations of all the means assembled in the automatic programming means; and
Fig. 6 is a flow chart for explaining a prior art automatic programming system.

### Description of the Preferred Embodiment

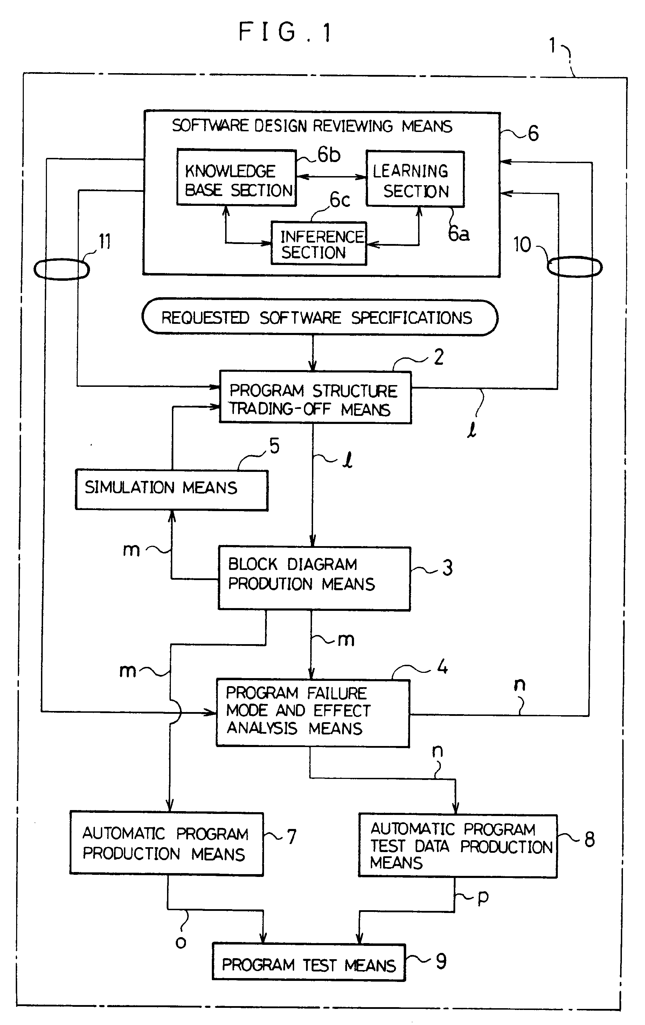

Now, an embodiment of the invention will be described in conjunction with an embodiment thereof. Fig. 1 shows the entire constitution of an embodiment of the invention, which is an automatic programming system 1. The automatic programming system 1 uses as a processor a usual computer available as hardware in the market.

Referring to Fig. 1, reference numeral 1 designates the automatic programming system as a whole. Numeral 2 designates program structure trading-off means assembled as a software in the automatic programming system 1. Numeral 3 block diagram production means for producing block diagrams including signal system diagrams according to the results of the program structure trading-off means 2. Numeral 4 designates failure mode and effect analysis means for performing failure mode and effect analysis of a program according to the results of the block diagram production means 3 to produce a failure mode and effect analysis sheet. Numeral 5 designates simulation means for performing simulation for confirmation of operation from the block diagrams. Numeral 6 designates software design review means including a learning section 6a, a knowledge base section 6b and an inference section 6c. The learning section 6a effects acquisition and learning of software design knowledge from results 10 of processing of the program structure trading-off means 2 and the failure mode and effect analysis means 4. The knowledge base section 6b stores knowledge produced by the learning section 6a and design knowledge. The inference section 6c performs inference by using the knowledge stored in the knowledge base section 6b. Numeral 7 designates automatic program production means for automatically producing source codes of program from the results of the block diagram production means 3. Numeral 8 designates automatic program test data production means for automatically producing program test data from the results of the failure mode and effect analysis means 4. Numeral 9 designates program test means for performing program tests according to the results obtained from the automatic program production means 7 and the automatic program test data production means 8.

With the automatic programming system having the above construction, with interlocked operation of the means 2 to 9 the designing, production and test of program can be done substantially entirely automatically. Now, the function of the means 2 to 9 will be described in detail.

A program structure is generally comprised of minimum elements called sub-routines or modules. These elements are hereinafter called parts. Parts include objects or classes so called in the field of knowledge engineering as well as the sub-routines and modules. A program unit, which comprises a plurality of such parts and has a certain function, is called a component. Data of these parts and components are preliminarily stored in the knowledge base section 6b in the software design review means 6.

The program structure trading-off means 2 performs trading-off of a program structure according to software request specifications. The software request specifications prescribe function, performance, scale, etc. required for a software (program) to be produced. Trading-off is effected between these specifications and realizable program structure to determine a structure which meets the required specifications as much as possible. The structure is determined roughly in two classes. In the first step, basic structures of program functions necessary for realizing rough request functions among the required specifications are determined by trading-off. Then, further detailed structures for realizing each individual program function are determined.

When determining the basic structures of the program functions and the detailed program structures, the program structure trading-off means 2 is provided with evaluation standard parameters for optimization to perform optimization. The evaluation standard parameters include process speed, scale, transplantation property, cost and results of use of program. The process of optimization noted above adopts a process argorithm utilizing a "dynamic planning process" in a mathematical planning method hitherto utilized and a "constraint solving theory" noted in the field of the knowledge engineering.

Furhter, the programme structure trading-off means 2 has a function of performing the program structure trade-off described above in accordance with interactions with a designer. This function will be described hereinunder.

Where the program structure trade-off is performed as a colloquial process, with an input of a specification of a software function required for a program to be designed from the designer, component data meeting the requested specifications or equivalent data is selected from among the component data bases in the knowledge base section 6b in the software design review means 6 and displayed as combination data on a graphic display screen. The component data bases include the process speeds, scales, transplantations properties, costs, input/output conditions, results of use, etc., of the program as evaluation parameters. The designer can determine an optimum component combination ℓ of the basic constitution by performing the optimization process by using the requested specifications and these evaluation parameters and, if necessary, altering the component combination by the colloquial process. Likewise, a combination of parts is determined with respect to a detailed program structure consisting of parts.

The block diagram producing means 3 produces the program block diagram m based on the basic structures of the program function and the detailed program structures produced as the results of the program structure trading-off means 2. The block diagrams m are a program for performing the same processings as a program, drawing general block diagrams, even though the signal system diagrams are contained therein.

The failure mode and effect analysis means 4 performs failure mode and effect analysis (abbreviated FMEA) on the basis of the program block diagrams m and produces the FMEA sheet n from the results of analysis.

The FMEA process is an analysis process popular as a system engineering analysis process and performed at the time of the design. This FMEA process is applied to the failure mode and effect analysis of program. In case of the software (program), the concept of the above parts and components is introduced, and the operation of this FMEA process is introduced into the failure mode and effect mode analysis of program.

The program designer executes the FMEA process while effecting colloquial process with the automatic programming system 1. More specifically, the process is done with an answer input by a specialist designer to a question displayed on the graphical display.

The failure mode and effect analysis means 4 comprises an FMEA format production program and a question generation process program. The operations of these programs will now be described in detail.

### (a) FMEA format production program

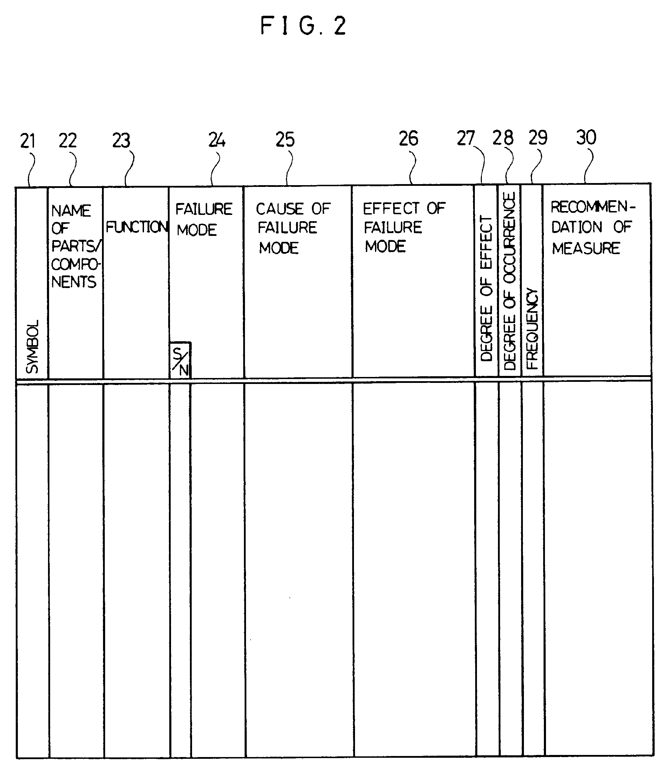

This program is for producing a format of the FMEA sheet on the basis of the FMEA process. It has a function similar to the flow of process of a program for producing a format of a usual table, and it is produced automatically. Fig. 2 shows an example of the format of the FMEA sheet used in this program. In the Figure, columns 21 to 30 have names concerning the contents to be stated in the colloquial process. These columns are provided by a division usually adopted in the FMEA process.

### (b) Question generation process program

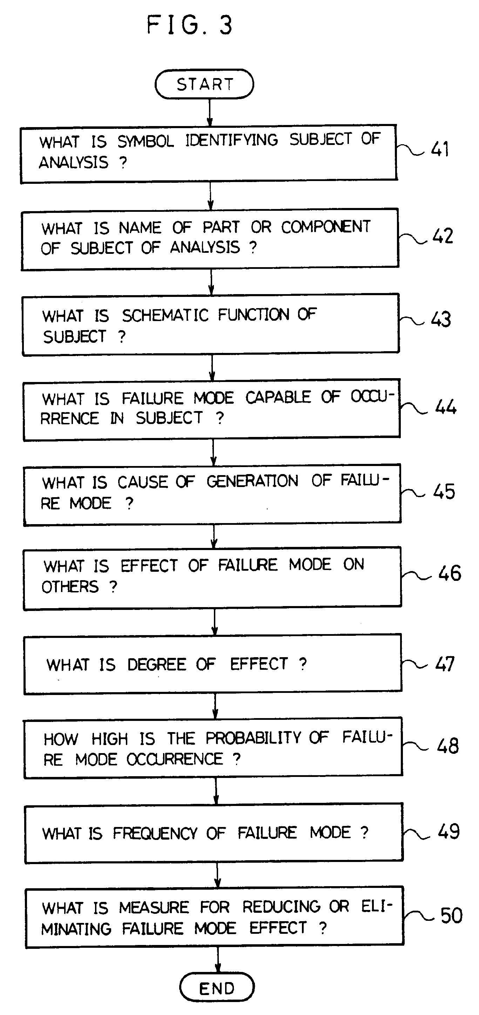

This program is for generating questions to fill specific contents in each vacant column of the FMEA sheet produced by the above FMEA format production program and displaying these questions on the graphical display screen. Then, it is for taking answers of the specialist (designer) to the questions and filling corresponding FMEA sheet columns with the answers. These operations are similar to those in case of a usual colloquial process program. Fig. 3 shows a flow chart of a specific example of a sequence of questions generated in the order of a program process for explaining the operations of the program process in further detail. As the specialist inputs sequential answers to questions 41 to 50 from a keyboard of the automatic programming system 1, the program functions to fill the input answers into each column of the FMEA sheet to complete the FMEA sheet (analysis sheet) n.

Further, each of the values contained in the knowledge base section 6b of the software design review means 6 are quoted at the time of producing the FMEM sheet (analysis sheet) n.

Further, the FMEA sheet n based on the FMEA process noted above may be completed by a colloquial process between the automatic programming system 1 and the specialist by using the failure mode and effect analysis means 4 consisting of the two programs (a) and (b) described before.

The simulation means 5 is a program for performing simulation of program process operation including confirmation of operation as to whether it is possible to attain a function satisfying required specifications (hereinafter referred to as design specifications) recognized in the stage of design according to the program block diagrams m produced by the block diagram production means 3 through a trading-off process. This program is for a process operation similar to a general simulation program. If it is found as a result of the simulation that no function satisfies the design specifications, the routine goes back to the program constitution trading-off means 2 to review the program constitution and performs program constitution trading-off afresh. These operations are done repeatedly until a function satisfying the design specifications is obtained.

The software design review means 6 comprises the learning section 6a, the knowledge base section 6b and the inference section 6c as shown in Fig. 1. In the knowledge base section 6b parts designed in the past and having results of trading-off are accumulated. The software design review means 6 has the following three different functions, which will now be described in detail together with their operations.

### (1) Design knowledge acquisition and learning function

As shown in Fig. 1, design knowledge and rules are extracted from the results 10 of processes of the program constitution trading-off means 2 and the failure mode and effect analysis means 4 and are arranged to produce knowledge for design reviewing concerning software, and this knowledge is stored as knowledge base in the knowledge base section 6b.

### (2) Design evaluation function

The design is reviewed using the knowledge for design reviewing concerning a software stored in the knowledge base section 6b, and indeficiencies of the design are pointed out to provide data 11 reflected on design operations using the program constitution trading-off means 2 and the failure mode and effect analysis means 4 for effecting evaluation, improvement and confirmation of the program design.

### (3) Design consultation function

The knowledge base is retrieved intelligently in response to an inquiry from a designer to provide various information necessary for the design.

The above three functions (1) to (3) can be provided by an interlocked operation of the learning section 6a, the knowledge base section 6b and the inference section 6c constituting the software design review means 6. These section will now be described.

### (A) Learning section 6a

The learning section 6a mainly has a role of securing and studying design knowledge and performs intelligent process using the knowledge base section 6b and inference section 6c.

By the term "intelligent" is meant that there is some capacity of effecting some inference on the basis of knowledge base and inference function. "Some inference" means what is generally defined in the field of the knowledge engineering, for instance, deductive inference, inductive inference and analogical inference.

The learning section 6a can automatically produce knowledge for design reviewing concerning a software by heuristic or experimental learning on design knowledge acquired by using the above inference functions and knowledge base.

By the term "heuristic learning" is meant learning by the above inductive inference or the like. Further, fragments of knowledges acquired are classified and arranged in a systematic structure to be stored in the knowledge base for pointing out indeficiencies of knowledges.

### (B) Knowledge base section 6b

In the knowledge base section 6b is stored what is obtained by arranging and editing various pieces of knowledges and components and parts for programs.

There are four kinds of knowledges as follows.

### (i) Past design data

Design data expressed by characters, numerals, drawings and other images, malfunction data, check lists, etc., concerning past examples of program design (including parts and components)

### (ii) Design data acquired this time

Design data acquired from the results of processes of the program constitution trading-off means 2 and the failure mode and effect analysis means 4

### (iii) Learning result data

Design and design review knowledge concerning software obtained from design data secured in ( i ) and ( ii ) as a result of learning using the inference function

### (iv) Design model data

These data are also called "object models" in the field of knowledge engineering and express design objects themselves. For instance, the data concerning free and ideal design based on initially requested specifications and free from trade-off restrictions. The four different kinds of knowledges described above, are stored in various forms in the knowledge base section 6b.

The "various forms" here are generally called the knowledge nomencalture in the field of knowledge engineering, and they mean, for instance, "production system", "frame", "blackboard model", "meaning network", "predicative theory" and "object".

### (C) Inference section 6c

The inference section 6c is a mechanism independent of the learning section 6a and knowledge base section 6b, and it performs inference using the knowledge stored in the knowledge base section 6b.

The "inference" means a "function of deriving from known data a piece of data, which is the same in the meaning, or a piece of data, which is included in that data but is in a different expression at least in an elucidative form", and a syllogism is included in this inference.

The inference section 6c, however, is provided not only with the syllogism but also with various other inference functions generally defined in the field of the knowledge engineering such as inductive inference, analogical inference and default inference.

As is obvious from the above, the software design review means 6 consisting of the learning section 6a, knowledge base section 6b and inference section 6c is provided with design knowledge acquisition and learning section, design evaluation function and design consultation function and useful as design support means for supporting software design and reviewing thereof.

The automatic program production means 7 performs an operation of producing program source codes o on the basis of block diagrams m produced by the block diagram production means 3. The block diagrams m consist of parts called sub-routines and modules, and they can be automatically produced in relation to pertinent source codes o on the basis of part data bases.

The automatic program test data production means 8 performs an operation of automatically producing program test data from the results of analysis of each failure mode executed by the failure mode and effect analysis means 4 and the resultant effect. Here, the program test data is called test (diagnosis) rules p. Various deficient cases are examined, and corresponding failures are distributed in advance. These rules are supplied to the knowledge data base section of the program test means 9 and serve as test rules p corresponding to diagnostic decision standards for program test.

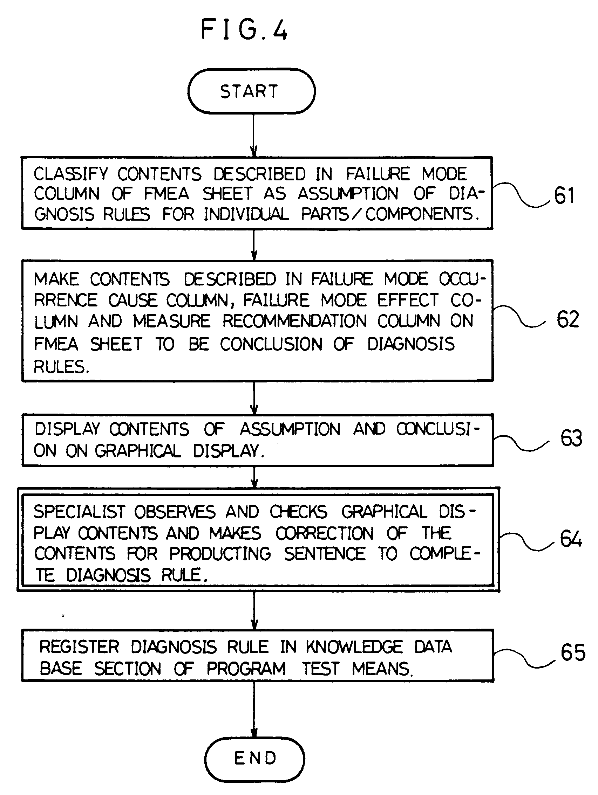

Fig. 4 is a flow chart showing a flow of process for explaining the operation of the automatic program test data production means 8. In the Figure, processes 61 to 63 and 65 are executed automatically. In a process 64, the contents of a program diagnosis rule automatically produced in the processes 61 to 63 are checked. If necessary, a process of correction by the specialist is included. The corrected program diagnosis rule (or test rule) p obtained after final check is stored in the knowledge data base section of the program test means 9 to be utilized for program test.

The program test means 9 performs test on a program source code obtained from the automatic program production means 7 according to the program diagnosis rule (test rule) p produced by the automatic program test data production means 8. The program test means 9 performs an operation similar to the case of software (program) called "diagnostic expert system" in the field of the knowledge engineering and the artificial intelligence. It includes a knowledge data base section and an inference function section (these sections being not shown) and can perform program test.

In the knowledge data base section, program diagnosis rules (test rules) p for program test are stored. The inference function section consists of general argorithms called "inference engine" in the field of the knowledge engineering and the artificial intelligence. An argorithm for inferring a result by the syllogism or like process is provided in software, and the diagnosis rules p are used when inferring a diagnosis result from a gathering that "it is B if it is A".

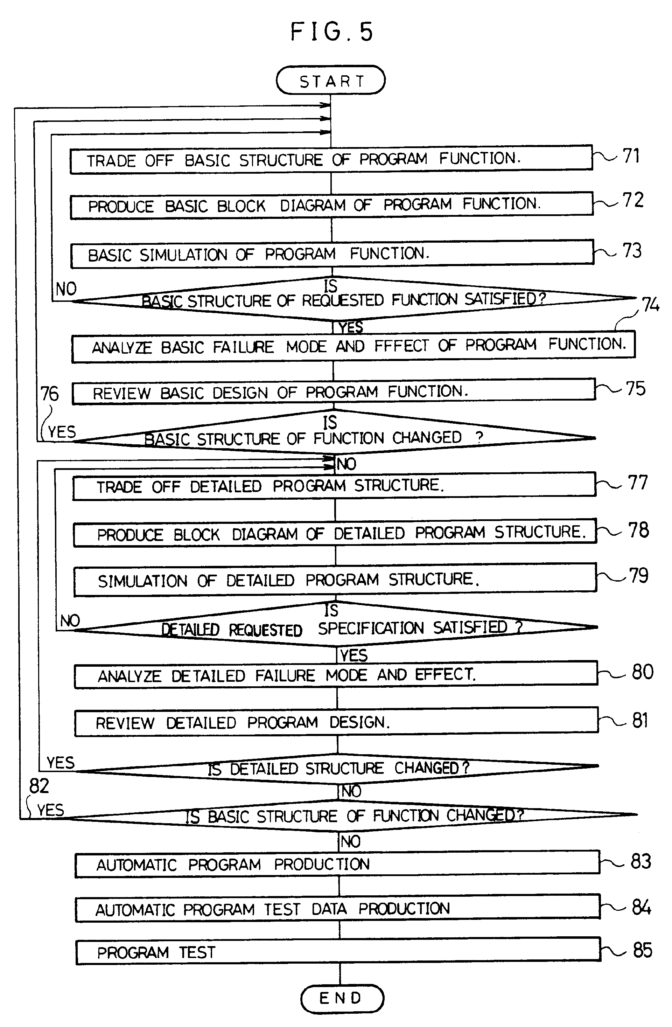

While the construction, operation and effect of the individual means assembled as software in the automatic programming system 1 have been described, the relation among the individual means and overall operation and effect of these means are shown in the form of flow chart in Fig. 5.

As shown in Fig. 5, the program structure trading-off means 2 first performs trading off of the basic structure of program function according to ideal requested specifications of software design (STEP 71). According to the result of trading-off the block diagram production means 3 produces a basic block diagram of program function (STEP 72). According to this basic block diagram of program function, the simulation means 5 performs basic simulation of program function for confirming basic operation of program function (STEP 73). If the basis of the requested function is satisfied, the routine goes to a next step 74. Otherwise, the routine goes back to the step 71. In the step 74, the program failure mode and effect analysis means 4 performs basic failure mode and effect analysis of program function according to the basic block diagram thereof. As a result, a FMEA sheet is produced.

Then, the software design review means 6 performs basic design review of program function for reviewing the design operations (STEP 75). In a next step 76, a check is done on the result of the design review as to whether it is necessary to change the basic structure of program function. If the check yields YES, the routine goes back to the step 71 of trading off the basic structure of program function to perform the process as described. The step 75 of program function design review may, if necessary, be executed after each of the steps described above, for instance the step 71 of trading off the basic structure of program function.

When no change of the basic structure of program function is necessary, the routine goes to a step 77 of trading off detailed program structures. Like the step 71 of trading off the basis structure of program function, a detailed structure block diagram is produced after the trade-off step 77 (STEP 78). Then, a simulation step 79 is executed. Subsequently, a step 80 of failure mode and effect analysis on details of program is executed to produce the FMEA sheet. Then design review is done with respect to the detailed program structure (STEP 81). This step 81 of design review may, if necessary, be executed after the step 77 of trading off detailed programme structure as well. If it is found that it is necessary to change the basic structure of program function in addition to the detailed program structure change (STEP 82), the step 71 of trading off the basic structure of program function should be executed again. In this case, the routine goes back to the first step 71.

When the FMEA sheet production is completed with completion of the steps concerning the basic structure of program function and detailed program structure, an automatic program production step 83 is executed to produce program source codes. Then, the automatic program test data production means 8 executes an automatic program test data production step 84 according to the FMEA sheet produced to produce program diagnosis rules, which are stored in the knowledge data base section of the program test means 9. Finally, the program test means 9 performs a program test step 85, thus bringing an end to the routine.

In the above embodiment, the diagnosis rules stored in the knowledge data base section of the program test means 9 are in the form that "if it is B it is A". However, this form of diagnosis rule is by no means limitative, and it is possible to adopt any other diagnosis rule form such as "frame", "blackboard model", "meaning network", "predicative logic" and "object", or a plurality of these forms may be adopted in combination. Also, the program test means 9 may adopt other inference functions than the syllogism, for instance, inductive inference, analogical inference and default inference generally defined in the field of the intelligence engineering.

Further, the result of the program test means 9, like the results 10 obtained form the program structure trading-off means 2 and program failure mode and effect analysis means 4, may be supplied to software design review means 6 so that the result of program test may be utilized for the production of knowledges for software design reviewing.

Furhter, while in the above embodiment the means 2 to 9 are all constituted by software, it is also possible to adopt hardware or firmware or combination thereof so long as similar functions and performance can be obtained. As examplies of such hardware and firmware, there are a neuro chip, which is a semiconductor chip implementing a neural network (nerve circuit network), and a fuzzy chip for performing a fuzzy set operation. The means 2 to 9 may be constituted such that hardware and firmware including these chips coexist.

Further, while a usual computer is used as a processor for each of the means 2 to 9, there is no limitation on the kind of computer so long as the processes of these means can be attained. Further, not only a single computer but also a plurality of computers may be employed according to the contents of processes of the means 2 to 9.

Further, while the date of parts and components used in the program structure trading-off means 2 are contained in the knowledge base section 6b, these data may as well be stored distributedly in separate data bases other than the knowledge base section 6b.

Further, while the above embodiment has concerned with a system of automatizing the programming operation in a broad sense including all the steps of software design, production and test, the same effects as described above may also be obtained when the invention is applied to software development support systems or semi-automatic programming systems for supporting operations that are performed by men.

As has been described in the foregoing, according to the invention eight different means for automatizing the operations of software design, production and test are assembled as software in a computer such that the individual means are operable in an interlocked relation to one another, it is possible to realize same man-hour, automatize and increase speed of the operations of software design, design review and program production.

The features disclosed in the foregoing description, in the claims and/or in the accompanying drawings may, both, separately and in any combination thereof, be material for realising the invention in diverse forms thereof.

## Claims

1. An automatic programming system comprising program constitution trading-off means (2) for performing trading-off of a program constitution according to software request specifications which specify functions, performance, scale and other factors required for software to be produced so as to obtain a possible and optimum combination of components constituting the program, said program constitution trading-off means (2) having evaluation reference parameters for optimising trading-off and being provided with a function of effecting an optimisation process and also effecting trading-off in interactive colloquy with a designer to determine a basic structure of program functions necessary for realising rough requested functions in requested software specifications and then determine detailed structures for realising each program function, block diagram production means (3) for producing block diagrams including signal system diagrams on the basis of the program constitution determined by the trading-off means (2); program failure mode and effect analysis means (4) for performing failure mode and effect analysis of the program on the basis of the block diagrams to produce an analysis sheet, said program failure mode and effect analysis means (4) including format production means for producing a format of an analysis sheet for failure mode and effect analysis and question generation process means for producing and displaying questions for filling blank areas of the obtained analysis sheet and filling blank areas of the analysis sheet with answers interactively provided by the designer; simulation means (5) for performing simulation for confirming the operation of the program constituted by the block diagrams; software design reviewing means (6) including a learning section (6a) for acquisition and learning design knowledge about a software from the source of production of the combination of the optimum combination of the components of the program and the analysis sheet, a knowledge base section (6b) for storing the acquired design knowledge and an inference section (6c) for effecting inference by using the acquired design knowledge, said software design reviewing means (6) having a design knowledge acquisition and learning function of extracting, design knowledges and rules from a result of processes of said program constitution trading-off means (2) and said program failure mode and effect analysis means (4), and arranging the extracted knowledges and rules to produce a knowledge for design review concerning said program constitution according to software request specifications, the produced knowledge being stored in said knowledge base section, a design evaluation function of reviewing a design by using said knowledge for design review to point out deficiencies of the design and let the review reflect on design operations using said program constitution trading-off means (2) and said program failure mode and effect analysis means (4), and a design consultation function of retrieving the knowledge base section (6b) according to interactive inquiries from the designer and indicating various data necessary for the design, said three functions being realised by interlocked operations of said learning section (6a), said knowledge base section (6b) and said inference section (6c), automatic program production means (7) for producing program source codes on the basis of the block diagrams produced by the block diagram production means (3); automatic program test data production means (8) for producing program test rules from the analysis sheet and program test means (9) for performing program tests on the program source codes on the basis of the test rules.

2. The automatic programming system according to claim 1, wherein the knowledge base section (6b) stores data on each part of a program, said part being the minimum element of the program, as well as data on each component data base which comprises a plurality of such parts and stores program diagnosis rules for program test adopting an inference function.

## Patentansprüche

1. Automatisches Programmiersystem, bestehend aus Programmaufbausabwägungsmitteln (2) zur Durchführung einer Abwägung eines Programmaufbaus nach den Softwareanforderungsspezifikationen, die die Funktionen, die Leistung, den Maßstab und andere Faktoren, die die von der zu erzeugenden Software verlangt werden, spezifizieren, um so eine mögliche und beste Kombination der Komponenten zu erhalten, die das Programm darstellen, wobei die Programmaufbausabwägemittel (2) Bewertungsreferenzparameter zur Optimierung der Abwägung besitzen und mit einer Funktion zur Bewirkung eines Optimierungsprozesses ausgestattet sind, und auch zur Bewirkung einer Abwägung im interaktiven Austausch mit einem Entwickler, um eine Grundstruktur der Programmfunktionen zu bestimmen, die notwendig sind zur groben Realisierung der angeforderten Funktionen in den Anforderungssoftwarespezifikationen, und dann die detaillierten Strukturen zur Realisierung jeder Programmfunktion zu bestimmen, aus Blockdiagrammproduktionsmitteln (3) zur Erzeugung von Blockdiagrammen inklusive Signalsystemdiagrammen auf der Basis des Programmaufbaus, die durch Abwägungsmittel (2) bestimmt sind; aus Programmfehler-Art- und Auswirkungs-Analysemitteln (4) zum Durchführen der Fehler-Art- und Auswirkungsanalyse des Programms auf der Basis der Blockdiagramme, um ein Analyseblatt zu erzeugen, wobei die Programmfehler-Art- und Auswirkungsanalysemittel (4) Formatproduktionsmittel zum Erzeugen eines Formates eines Analyseblattes zur Fehler-Art- und Auswirkungsanalyse umfassen und Frageerzeugungsprozeßmittel zur Erzeugung und zur Anzeige von Fragen zum Ausfüllen offengelassener Flächen des erhaltenen Analyseblattes und Ausfüllen der freigelassenen Flächen des Analyseblattes mit Antworten, die interaktiv vom Entwickler gegeben werden; aus Simulationsmittel (5) zum Durchführen einer Simulation zur Simulation, um den Betrieb des Programms, bestehend aus dem Blockdiagramm zu bestätigen; aus Softwareentwicklung-Überprüfungsmittel (6) mit einem Lernabschnitt 6a zum Aneignen und Lernen von Entwurfswissen über eine Software von der Quelle der Produktion der Kombination der optimalen Kombination der Komponenten des Programms und des Analyseblattes, mit einem Wissensdatenbankabschnitt (6b) zum Speichern angeeigneten Designwissens und mit einem Schlußfolgerungsabschnitt (6c) zum Bewirken einer Schlußfolgerung unter Benutzung des angeeigneten Designwissens, wobei die Softwaredesign-Überprüfungsmittel (6) eine Designwissenlernfunktion des Herausfilterns, von Designwissens und Regeln aus einem Ergebnis von Abläufen der Programmaufbausabwägemittel (2) und der Programmfehler-Art und Auswirkungs Analysemittel (4) und Anordnung des herausgefilterten Wissens und der Regel, um Wissen zu erzeugen zur Designüberprüfung, betreffend die Programmaufbau entsprechend der Softwareanforderungsspezifikationen, wobei das erzeugte Wissen in dem Wissensdatenbankabschnitt gespeichert ist, einer Entwurfsbewertungsfunktion zur Überprüfung eines Entwurfs unter Benutzung des Wissens zur Designüberprüfung, um Unzulänglichkeiten des Designs anzuzeigen und die Überprüfung von Designbetrieb unter der Benutzung der Programmaufbausabwägemittel (2) unter Programmfehler-Art- und Auswirkungsanalysemittel abzuwägen, und einer designberatenden Funktion über den Zugriff auf den Wissensdatenbasisabschnitt (6b) nach den interaktiven Anfragen vom Entwickler und zur Anzeige der notwendigen Daten für das Design bei drei Funktionen durch zusammenwirkende Vorgänge des lernenden Abschnittes (6a) des Wissensdatenbankabschnitt (6b) und des Schlußfolgeabschnittes (6c) realisiert sind, aus automatischen Programmerzeugungsmitteln (7) zum Erzeugen von Programmquellcode auf der Basis der Blockdiagramme, die durch die Blockdiagrammeerzeugungsmittel (3) erzeugt sind; aus automatischen Testdatenerzeugungsmitteln (8) zum Erzeugen von Programmtestregeln für das Analyseblatt und Programmtestmitteln (9) zur Durchführung von Tests in dem Programmquellcode auf der Basis der Testregeln.

2. Automatisches Programmiersystem nach Anspruch 1, wobei der Wissensdatenbankabschnitt (6b) Daten über jeden Teil eines Programms speichert, wobei dieser Teil der Minimalbestandteil des Programms ist, ebenso wie Daten über jede Teildatenbank, die eine Vielzahl solcher Teile umfaßt und Programmdiagnoseregeln für Programmtests speichert, die eine Schlußfolgerungsfunktion annehmen.

## Revendications

1. Système de programmation automatique comprenant un moyen de compromis de constitution de programme (2) pour effectuer un compromis d'une constitution de programme en fonction de spécifications de besoins logiciels, qui spécifient des fonctions, une performance, une échelle et d'autres facteurs pour le logiciel à produire, de manière à obtenir une combinaison possible et optimale de composants constituant le programme, ledit moyen de compromis de constitution de programme (2) ayant des paramètres de référence d'évaluation pour rendre optimal le compromis et étant doté d'une fonction de réalisation d'une procédure d'optimisation et également de réalisation d'un compromis en dialogue interactif avec un concepteur, pour déterminer une structure de base de fonctions de programme nécessaires pour réaliser des fonctions demandées brutes dans des spécifications de logiciel demandées et déterminer ensuite des structures détaillées pour réaliser chaque fonction de programme, un moyen de production de schéma à blocs (3) pour produire des schémas à blocs comprenant des diagrammes de signaux de système d'après la constitution de programme déterminée par le moyen de compromis (2); un moyen d'analyse de mode de défaillance de programme et d'effet (4) pour effectuer une analyse de mode de défaillance du programme et des effets d'après les schémas à bloc pour produire une feuille d'analyse, ledit moyen d'analyse de mode de défaillance de programme et des effets (4) comprenant un moyen de production de format, pour produire un format d'une feuille d'analyse pour l'analyse de mode de défaillance et d'effet et un moyen de traitement pour produire des questions, pour produire et afficher des questions servant à remplir des zones blanches de la feuille d'analyse obtenue et à remplir des zones blanches de la feuille d'analyse avec des réponses fournies de façon interactive par le concepteur ; un moyen de simulation (5) pour effectuer une simulation en vue de confirmer le fonctionnement du programme constitué par les schémas à blocs ; un moyen d'étude de conception de logiciel (6) comprenant une section d'apprentissage (6a) pour acquérir et apprendre une connaissance de conception concernant un logiciel à partir de la source de production de la combinaison optimale des composants du programme et de la feuille d'analyse ; une section de base de connaissances (6b) pour stocker la connaissance de conception acquise et une section de déduction (6c) pour effectuer une déduction à l'aide de la connaissance de conception acquise, ledit moyen d'étude de conception de logiciel (6) ayant une fonction d'acquisition et d'apprentissage de connaissances de conception consistant à extraire des connaissances et des règles de conception, a partir du résultat des procédures dudit moyen de compromis de constitution de programme (2) et dudit moyen d'analyse de mode défaillance de programme et d'effet (4), et à agencer les connaissances et les règles extraites pour produire une connaissance en vue d'une étude de vérification concernant lesdites constitutions de programme en fonction des spécifications voulues de logiciel, la connaissance produite étant stockée dans ladite section de base de connaissances, une fonction d'évaluation de conception consistant à vérifier une conception à l'aide de ladite connaissance pour une vérification de conception qui indique des défauts de conception et de porter la vérification sur les opérations de conception à l'aide dudit moyen de compromis de constitution de programme (2) et dudit moyen d'analyse de mode de défaillance de programme et d'effet (4), et une fonction de consultation de conception consistant à récupérer la section de base de connaissances (6b) selon des demandes interactives du concepteur et à indiquer différentes données nécessaires pour la conception, lesdites trois fonctions étant réalisées par les opérations interverrouillées de ladite section d'apprentissage (6a), ladite section de base de connaissances (6b) et ladite section de déduction (6c), ledit moyen de production de programme automatique (7) pour produire des codes de source de programme d'après des schémas à blocs produits par le moyen de production de schémas à blocs (3) ; un moyen de production de données de test de programme automatique (8) pour produire des règles de test de programme à partir de la feuille d'analyse et un moyen de test de programme (9) pour effectuer des tests de programme sur les codes source de programme, d'après les régles de test.

2. Système de programmation automatique selon la revendication 1, dans lequel la section de base de connaissances (6b) stocke des données sur chaque partie d'un programme, lacite partie étant l'élément minimal du programme, ainsi que les données sur chaque base de données de composant, qui comprennent une pluralité de telles parties et stockent des règles de diagnostic de programme pour un test de programme adoptant une déduction.
